# EUROPEAN PATENT APPLICATION

(11) **EP 2 887 285 A1**
(43) Date of publication of application: **24.06.2015**
(21) Application number: 14198630.7
(22) Date of filing: 17.12.2014
(51) Int. Cl.: G06Q 10/06, G06Q 30/02, G06F 11/07, G06F 11/30

(54) **Data process system and data process method**

(30) Priority: 19.12.2013 JP 2013262853; 09.10.2014 JP 2014208008
(71) Applicant: Ricoh Company, Ltd., Tokyo 143-8555 (JP)
(72) Inventor: Ono, Hiroaki, Ohta-ku Tokyo 143-8555 (JP); Tagami, Eiji, Ohta-ku Tokyo 143-8555 (JP); Sasaki, Chiho, Ohta-ku Tokyo 143-8555 (JP)
(74) Representative: Maury, Richard Philip

(57) **Abstract**

A data process system includes an operation history data gathering unit that obtains an operation history data of an image process apparatus, a data analysis unit that analyzes the operation history data according to a predetermined condition and generates notification data in a case where the predetermined condition is satisfied, a screen data generation unit that generates screen data according to the notification data for displaying a notification screen to indicate that the predetermined condition is satisfied, and a document data generation unit that generates document data pertaining to a document to be presented to a user of the image process apparatus based on the analyzed operation history data in response to an operation performed on the notification screen.

## Description

### BACKGROUND OF THE INVENTION

### 1. Field of the Invention

The present invention relates to a data process system and a data process method, and particularly to a data process system and a data process method for efficiently supporting sales activities.

### 2. Description of the Related Art

A sales activity of a product may be categorized as a sales activity with respect to a preexisting customer or a sales activity with respect to a new customer. In order to increase sales results, it is preferable to contact customers as much as possible. However, in order to efficiently increase sales results, it is desired to contact customers at the right timing.

As an example of a method for supporting sales activities, there is proposed a method of searching for similar sales activity data pertaining to one or more designated items based on stored sales activity data and outputting the characteristics of the similar sales activity data as a recommendation value according to an IF-THEN rule. Thereby, a sales representative can receive some kind of recommendation value pertaining to other undecided items by inputting data of a decided item (see, for example, Japanese Laid-Open Patent Publication No. 2004-287874).

However, the method disclosed in Japanese Laid-Open Patent Publication No. 2004-287874 does not consider sales support from the standpoint of the timing of visiting a customer. For example, in a case where an image process apparatus such as a printer, a copier, or a scanner is installed in a given location, the charging of fees or the like is based on the amount in which the image process apparatus has been run at the installed location (e.g., number of copies, number of times of printing or scanning). Thus, the running amount at the installed location can be obtained as data.

However, the disclosed method uses the obtained data for the charging of fees or the like and does not use the obtained data from the standpoint of supporting sales. Even if the obtained data is used for sales support, the obtained data cannot easily be put to use because the grasping of the status of customers differs depending on the ability of the sales representative.

### SUMMARY OF THE INVENTION

The present invention may provide a data process system and a data process method that substantially obviates one or more of the problems caused by the limitations and disadvantages of the related art.

Features and advantages of the present invention are set forth in the description which follows, and in part will become apparent from the description and the accompanying drawings, or may be learned by practice of the invention according to the teachings provided in the description. Objects as well as other features and advantages of the present invention will be realized and attained by a data process system and a data process method particularly pointed out in the specification in such full, clear, concise, and exact terms as to enable a person having ordinary skill in the art to practice the invention.

To achieve these and other advantages and in accordance with the purpose of the invention, as embodied and broadly described herein, an embodiment of the present invention provides a data process system including an operation history data gathering unit that obtains an operation history data of an image process apparatus, a data analysis unit that analyzes the operation history data according to a predetermined condition and generates notification data in a case where the predetermined condition is satisfied, a screen data generation unit that generates screen data according to the notification data for displaying a notification screen to indicate that the predetermined condition is satisfied, and a document data generation unit that generates document data pertaining to a document to be presented to a user of the image process apparatus based on the analyzed operation history data in response to an operation performed on the notification screen.

Other objects, features and advantages of the present invention will become more apparent from the following detailed description when read in conjunction with the accompanying drawings.

### BRIEF DESCRIPTION OF THE DRAWINGS

Fig. 1 is a schematic diagram for describing an operation of a data process system according to an embodiment of the present invention;
Fig. 2 is a block diagram illustrating a hardware configuration of a data process apparatus according to an embodiment of the present invention;
Fig. 3 is a block diagram illustrating a functional configuration of a data gathering server according to an embodiment of the present invention;
Fig. 4 is a schematic diagram illustrating an example of log data according to an embodiment of the present invention;
Fig. 5 is a schematic diagram illustrating an example of company data according to an embodiment of the present invention;
Fig. 6 is a schematic diagram illustrating an example of sales activity data according to an embodiment of the present invention;
Fig. 7 is a block diagram illustrating a functional configuration of a log analysis server according to an embodiment of the present invention;
Fig. 8 is a schematic diagram illustrating an example of hierarchical structure data according to an embodiment of the present invention;
Fig. 9 is a schematic diagram for describing a concept of a hierarchical structure according to an embodiment of the present invention;
Fig. 10 is a schematic diagram illustrating an example of condition data according to an embodiment of the present invention;
Fig. 11 is a schematic diagram illustrating an example of alert data according to an embodiment of the present invention;
Fig. 12 is a schematic diagram illustrating a functional configuration of a screen server according to an embodiment of the present invention;
Fig. 13 is a schematic diagram illustrating an example of an alert confirmation screen according to an embodiment of the present invention;
Fig. 14 is a schematic diagram illustrating an example of an alert details/customer status confirmation screen according to an embodiment of the present invention;
Fig. 15 is a schematic diagram illustrating an example of form selection data according to an embodiment of the present invention;
Fig. 16 is a schematic diagram illustrating an example of an improvement proposal sheet according to an embodiment of the present invention; and
Fig. 17 is a sequence diagram illustrating an overall operation of a system according to an embodiment of the present invention.

### DETAILED DESCRIPTION OF THE PREFERRED EMBODIMENTS

Embodiments of the present invention are described with reference to the accompanying drawings. In the embodiment described below, a data process system generates an alert by gathering and analyzing an operation history of each of the image process apparatuses of a customer and applying a predetermined condition to the result of the analysis. Further, the data process system automatically generates a document to be presented to the customer based on the alert.

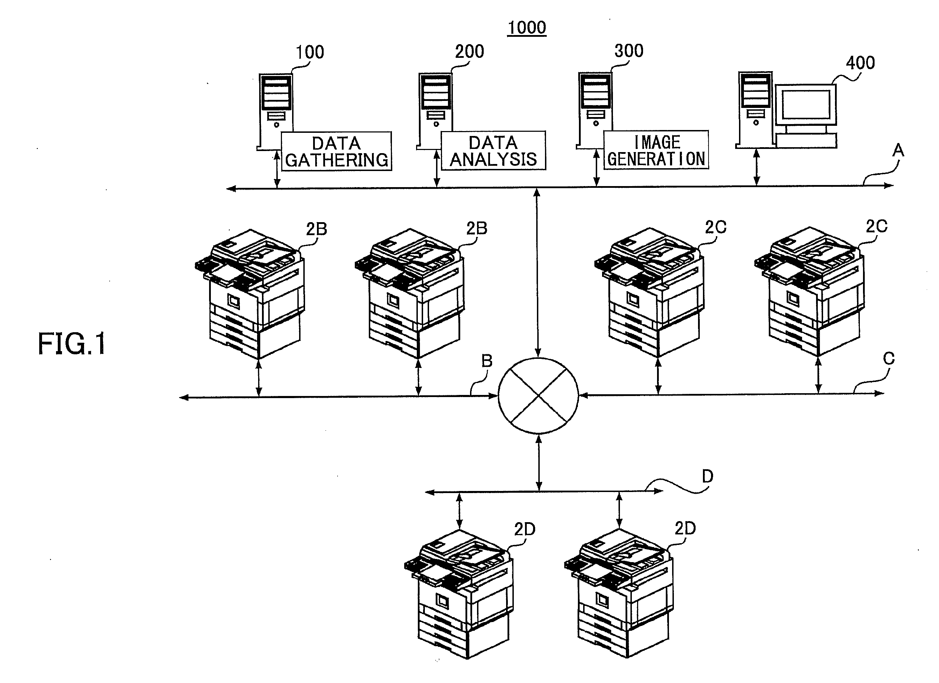

Fig. 1 is a schematic diagram illustrating a data process system 1000 according to an embodiment of the present invention. The data process system 1000 of this embodiment is a sales supporting system. As illustrated in Fig. 1, the data process system (sales supporting system) 1000 includes a network A of a service provider and networks B-D of a service user that are connected by a public line such as the Internet. The network A includes a data gathering server 100, a data analysis server 200, a screen generation server 300, and a client terminal 400 that are connected to each other.

Multiple image process apparatuses 2B from which operation histories are obtained are connected to the network B of the service user. Similar as the network B, the networks C and D also have multiple image process apparatuses 2C, 2D connected thereto. The configuration of the system 1000 is merely an example. The number of image process apparatuses included in the networks A-D is not to be limited in particular and may be changed according to an actual mode for operating the image process apparatuses.

The data gathering server 100 of the sales supporting system 1000 serves to provide a function of gathering data that is to be analyzed. The data analysis server 200 analyzes the data gathered by the data gathering server 200 and generates an alert for prompting contact to a customer for sales purposes. The screen generation server 300 generates a GUI (Graphical User Interface) for enabling a sales representative to use the sales supporting system 1000 based on, for example, the alert generated by the data analysis server 200 or the data gathered by data gathering server 100. Further, the screen generation server 300 transmits the generated GUI to the client terminal 400 including a PC (Personal Computer) or the like.

The image process apparatuses 2B-2D (hereinafter also collectively referred to as "image process apparatus 2") include, for example, an imaging function, an image forming function, and a communication function. Thus, the image process apparatus 2 may be an MFP (Multi-Function Peripheral) that can be used as a printer, a facsimile, a scanner, and a copier. In this embodiment, the image process apparatus 2 includes a function of storing log data and transmitting the log data to the data gathering server 100.

In this embodiment, the data gathering server 100, the data analysis server 200, and the screen generation server 300 provide the main functions of the sales supporting system 1000 as illustrated in Fig. 1. Alternatively, by exchanging data via a network, different servers may be used to provide the function of the data gathering server 100 according to the type of data to be gathered, or a single server may be used provide the function of the data analysis server 200 and the function of the screen generation server 300.

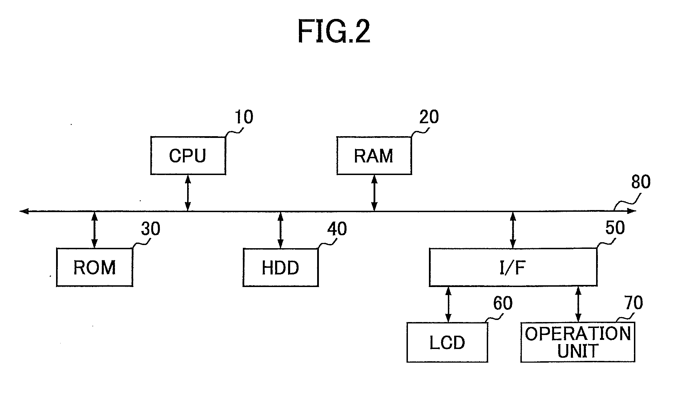

Next, hardware configurations of data process apparatuses such as the data gathering server 100, the data analysis server 200, the screen generation server 300, and the client terminal 400 are described with reference to Fig. 2. The image process apparatus 2 also has substantially the same hardware configuration of Fig. 2 except that the image process apparatus 2 further includes an engine for implementing, for example, a scanner and a printer.

As illustrated in Fig. 2, the data process apparatus of this embodiment has a configuration of a common server or a personal computer. That is, the data process apparatus of this embodiment includes, for example, a CPU (Central Processing Unit) 10, a RAM (Random Access Memory) 20, a ROM (Read Only Memory) 30, an HDD (Hard Disk Drive) 40, and an I/F (interface) 50 that are connected by a bus 80. Further, an LCD (Liquid Crystal Display) 60 and an operation unit 70 are connected to the I/F 50.

The CPU 10 is an arithmetic unit that controls the entire operation of the data process apparatus. The RAM 20 is a volatile storage medium that allows reading/writing of data at high speed. The RAM 20 is used as a work space when the CPU 10 processes data. The ROM 30 is a non-volatile storage medium dedicated for reading out data therefrom. Programs such as firmware are stored in the ROM 30. The HDD 40 is a non-volatile storage medium that allows reading/writing of data. For example, an OS (Operating System), various control programs, and application programs are stored in the HDD 40.

The I/F 50 connects the bus 80 and various hardware and networks together and controls their connection. The LCD 60 is a visual user interface for enabling the user to confirm the status of the data process apparatus. The operation unit 70 is a user interface for enabling the user to input data to the data process apparatus. The operation unit 70 includes, for example, a keyboard, a mouse, or the like. However, user interfaces such as the LCD 60 or the operation unit 70 may be omitted because the data gathering server 100, the data analysis 200, the screen generation server 300 of this embodiment are servers that are operated without being directly operated by the user.

With the above-described hardware configuration, the CPU 10 performs operations (functions) of the data process apparatus in accordance with a program stored in the ROM 30 or a program loaded to the RAM from a storage medium such as an optical disk (not illustrated). Thereby, a software control part of the data process apparatus can be implemented. By combining the software control part and the hardware configuration of the data process apparatus, the below-described functions (function units) of the data gathering server 100, the data analysis server 200, and the screen generation server 300 can be implemented.

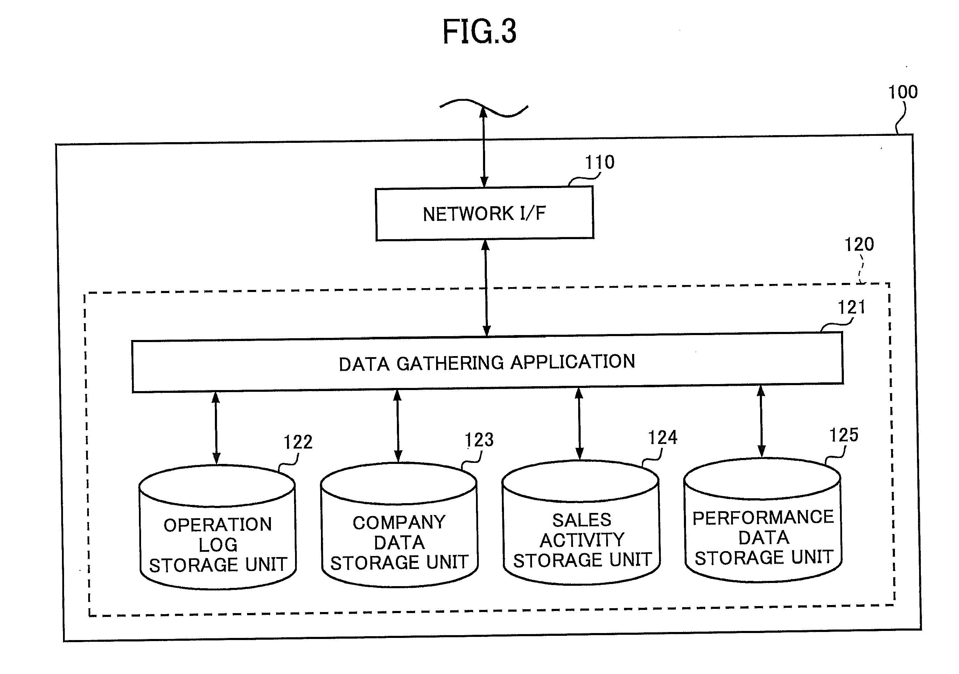

Next, a functional configuration of the data gathering server 100 according to an embodiment of the present invention is described. Fig. 3 is a schematic diagram illustrating the function configuration of the data gathering server 100 according to an embodiment of the present invention. As illustrated in Fig. 3, the data gathering server 100 includes a controller 120 and a network I/F 110. Further, the controller 120 includes a data gathering application 121, an operation log storage unit 122, a company data storage unit 123, a sales activity storage unit 124, and a performance data storage unit 125.

The network I/F 110 includes an interface for enabling the data gathering server 100 to communicate with other devices via a network. The network I/F may be, for example, an Ethernet (registered trademark) interface or a USB (Universal Serial Bus) interface. The controller 120 includes a combination of software and hardware and functions as a control unit for controlling the entire data gathering server 100.

The data gathering application 121 is a software module for implementing a function enabling the data gathering server 100 to gather various data. More specifically, the data gathering application 121 obtains log data of the image process apparatuses 2 via a network. The data gathering application 121 stores the obtained log data in a storage medium in a manner that the log data can be identified in correspondence with each image process apparatus 2. Thereby, the log data is stored in the operation log storage unit 122. Thus, the data gathering application 121 functions as an operation history data gathering unit.

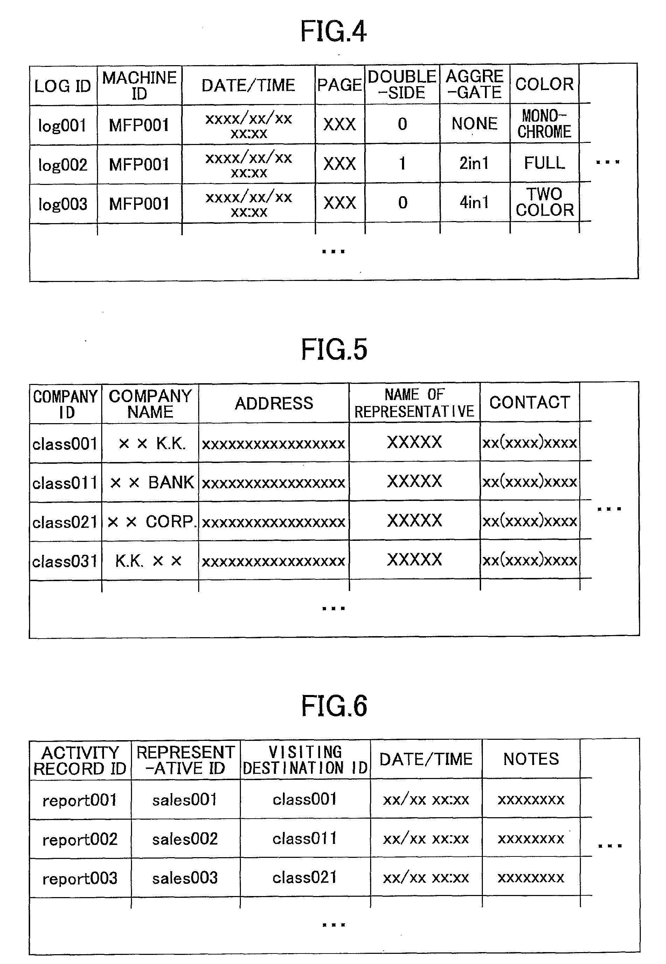

Fig. 4 is a schematic diagram illustrating an example of log data according to an embodiment of the present invention. As illustrated in Fig. 4, the log data includes an item "log ID" for identifying each operation log, an item "machine ID" for identifying an apparatus corresponding to each operation log, an item "date/time" of the operation log, an item "page" indicated the numbers of pages printed, an item "double-side" indicating whether double-side printing or single-side printing is performed, an item "aggregate" indicating whether aggregation printing (n-up printing) is performed, and an item "color" indicating whether color printing or monochrome printing is performed.

Further, the data gathering application 121 obtains company data (i.e., data pertaining to a company that is to be a sales target in the sales supporting system 1000) and stores the obtained company data in a storage medium. Thereby, the company data is stored in the company data storage unit 123. The company data obtained by the data gathering application 121 includes, for example, data obtained by accessing a predetermined network address or data input by the user.

Fig. 5 is a schematic diagram illustrating an example of company data according to an embodiment of the present invention. The company data includes an item "company ID" for identifying each company, an item "company name" indicating the name of each company, an item "address" indicating the location of each company, an item "name of representative (company representative name)" indicating the name of a company representative who is in charge when a sales person (sales representative) visits a company, and an item "contact" indicating a contact address when a sales person (sales representative) visits a company.

Further, the data gathering application 121 obtains sales activity data (i.e., data pertaining to a record of a sales activity of a sales representative using the sales supporting system 1000) and stores the sales activity data in a storage medium. Thereby, the sales activity data is stored in the sales activity storage unit 124. The sales activity data obtained by the data gathering application 121 includes, for example, data obtained by accessing a predetermined network address or data input by the user.

Fig. 6 is a schematic diagram illustrating an example of sales activity data according to an embodiment of the present invention. As illustrated in Fig. 6, the sales activity data includes an item "activity record ID" indicating each sales activity, an item "representative ID" for identifying a sales representative that conducted the sales activity, an item "visiting destination ID" for identifying a destination visited by a sales representative that conducted the sales activity, an item "date/time" indicating the date and time that the sales activity was conducted, and an item "notes" indicating particular notes such as the results of the sales activity. It is to be noted that the item "visiting destination ID" corresponds to the item "company ID" of Fig. 5.

Further, the data gathering application obtains performance data (i.e., data pertaining to the business performance of a company that is to be a sales target in the sales supporting system 1000) and stores the obtained performance data in a storage medium in a manner that the performance data can be identified in correspondence with each company. Thereby, the performance data is stored in the performance data storage unit 125. The performance data obtained by the data gathering application 121 includes, for example, data obtained by accessing a predetermined network address or data input by the user.

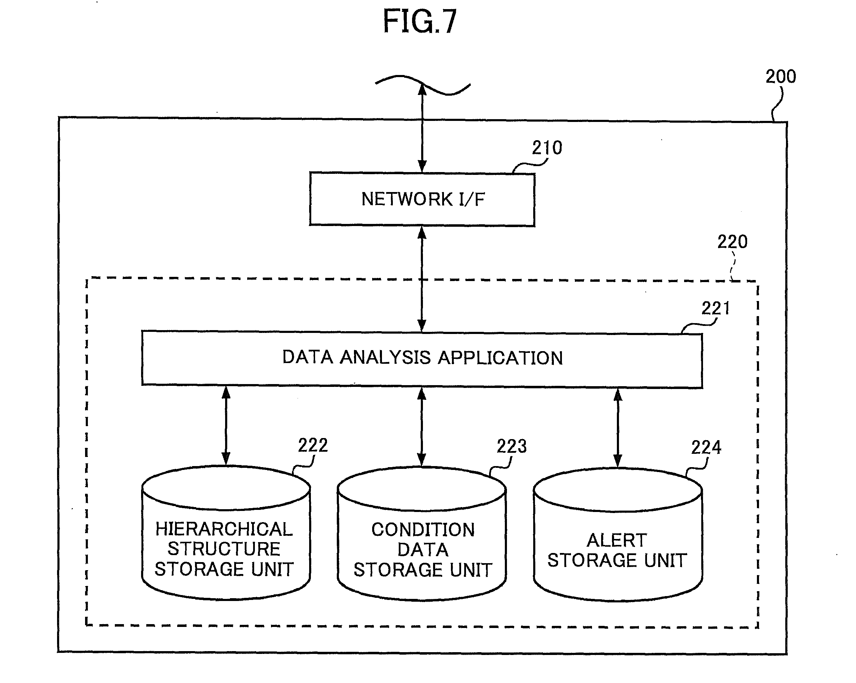

Next, a functional configuration of the data analysis server 200 according to an embodiment of the present invention is described. Fig. 7 is a schematic diagram illustrating the functional configuration of the data analysis server 200 according to an embodiment of the present invention. As illustrated in Fig. 7, the data analysis server 200 includes a controller 220 and a network I/F 210. Further, the controller 220 includes a data analysis application 221, a hierarchical structure storage unit 222, a condition data storage unit 223, and an alert storage unit 224.

The network I/F 210 includes an interface for enabling the data analysis server 200 to communicate with other devices via a network. The network I/F may be, for example, an Ethernet (registered trademark) interface or a USB (Universal Serial Bus) interface. The controller 220 includes a combination of software and hardware and functions as a control unit for controlling the entire data analysis server 200.

The data analysis application 221 analyzes the data obtained by the data gathering server 100 based on predetermined conditions. In accordance with the analysis, the data analysis application 221 generates an alert for notifying a sales representative the timing for contacting a customer. In performing the analysis, the data analysis application refers to a hierarchical structure defined in the hierarchical structure storage unit 222 and analyzes the obtained data in correspondence with each node included in the hierarchical structure.

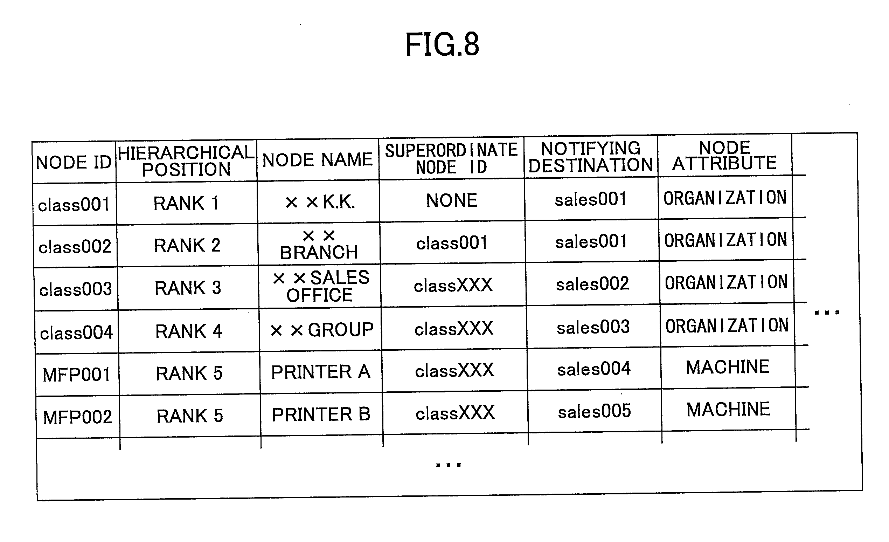

Fig. 8 is a schematic diagram illustrating an example of hierarchical structure data stored in the hierarchical structure storage unit 222 according to an embodiment of the present invention. As illustrated in Fig. 8, the hierarchical structure data of this embodiment includes various items that are associated with each other. For example, the hierarchical structure data includes an item "node ID" for identifying each node of a tree structure, an item "hierarchical position" indicating a hierarchy (rank) of each node of the tree structure, an item "node name" indicating a name of each node, an item "superordinate node ID" indicating a node to which a given node is subordinate (i.e., a node positioned directly above a given node), an item "notifying destination (reporting destination)" for identifying a sales representative to which a generated alert is notified, and an item "node attribute" indicating an attribute of each node.

The "node ID" which is an identifier of each node corresponds to the "machine ID" of Fig. 4, the "company ID" of Fig. 5, and the "visiting destination ID" of Fig. 6. The "hierarchical position" is a value of each node's hierarchical rank in the tree structure. For example, a hierarchical position "rank 1" indicates a node (nodal point) positioned at the peak of the tree structure, and a hierarchical position "rank 2" or after indicates a node (nodal point) that is second or a corresponding order counted from the peak of the tree structure.

The "superordinate node ID" is a value of a node positioned directly above a given node, that is, a superordinate node to which a node is subordinate. For example, because the node having the node ID "class 001" is positioned at the peak of the tree structure, the value of the superordinate node is "none". In a case where the node having the node ID "class 002" is set to be subordinate to the node having the node ID "class 001", the node ID of its superordinate node (in this case, the node having the node ID "class 001") is set as the value of the "superordinate node" of the node having the node ID "class 002".

The "notifying destination" is set with a value that identifies a sales representative to which a generated alert is notified. Thus, the "notifying destination" corresponds to the "representative ID" of Fig. 6. The "node name" is a value indicating a name of a node such as "XX K.K. (Kabushiki Kaisha)", "XX branch", or "printer A". The "node attribute" indicates whether the node is an organization using the image process apparatus 2 or a machine (image process apparatus 2) that is being used by an organization.
As illustrated in Fig. 8, the nodes such as "XX K.K.", "XX branch", "XX sales office", "XX group" are nodes of the user side. That is, "XX K.K." indicates a company that is using a service (service user), "XX branch" indicates a branch belonging to the company, "XX sales office" indicates a sales office belonging to the company, and "XX group" indicates a group belonging to the company. On the other hand, the node such as "printer A" and "printer B" are nodes that are machines. That is, "printer A" and "printer B" indicate machines that are used in an organization of a superordinate node.

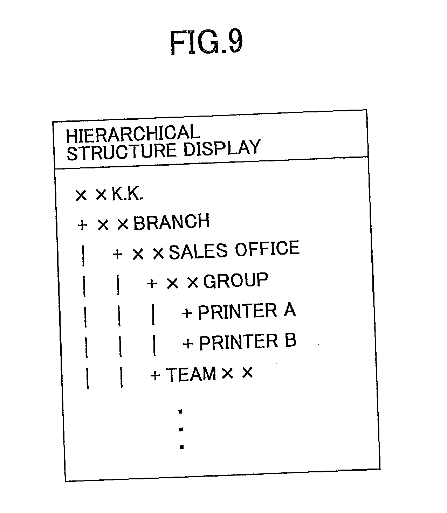

Thus, in the tree structure indicating an organization structure of the service user, an organization is associated with a machine as its subordinate node. Thereby, not only can each machine be analyzed but each organization can also be analyzed. Fig. 9 is a schematic diagram illustrating a tree structure defined by the hierarchical structure illustrated in Fig. 8. As illustrated in Fig. 9, "printer A" and "printer B" are defined as subordinate nodes of the organization in the service user's tree structure of Fig. 9. In the examples of Figs. 8 and 9, the nodes corresponding to "machine" are associated with the lowermost layer (lowermost rank) of the organization. Alternatively, the nodes corresponding to "machine" may be associated with layers that are higher than those of, for example, the "XX branch" or "XX sales office".

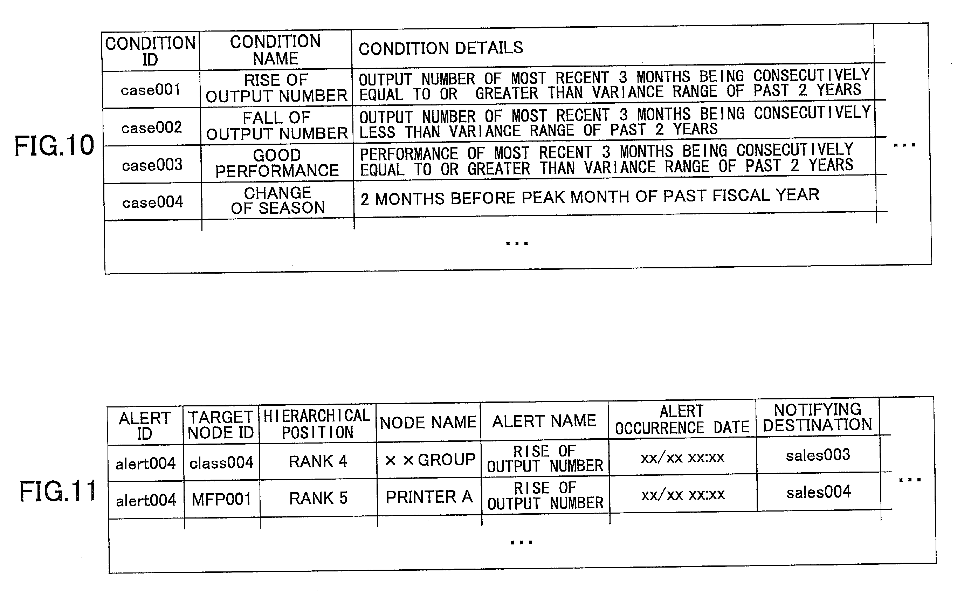

Fig. 10 is a schematic diagram illustrating an example of condition data stored in the condition data storage unit 223. As illustrated in Fig. 10, the condition data includes an item "condition ID" for identifying a condition, an item "condition name" indicating a name of a condition, and an item "condition details" indicating the content of a condition. The data analysis application 221 refers to the condition data illustrated in Fig. 10 and analyzes data gathered by the data gathering server 100 to determine whether the gathered data matches a condition defined in the condition data. As illustrated in Fig. 10, multiple conditions are set in the condition data. Thus, the data analysis application 221 performs analyses on each of the multiple conditions. Further, the data analysis application 221 performs analysis on each of the nodes described with Figs. 8 and 9.

For example, in a case of a condition "rise of output number" of Fig. 10, the data analysis application 221 calculates the output number in the most recent 3 months and the output number in the past 2 years by totaling (adding) the log data of Fig. 4 with respect to each machine. In addition to totaling the output number of each machine, the data analysis application 221 may also add the output numbers of multiple machines in a case of analyzing nodes belonging to a given node. For example, in a case of analyzing the node "XX group" indicated with the node ID "class 004" in Fig. 8, the output numbers of the nodes "printer A" and "printer B" subordinate to the node "XX group" are added together. Thereby, analysis results not only for each machine but also for their superordinate node "XX group" can be obtained. Accordingly, by analyzing each node of the tree structure indicating the structure of an organization, a change of a customer can be acutely detected to grasp an opportunity for sales.

In a case where a node that matches the "detailed conditions" of Fig. 10 exists as a result of the analysis, the data analysis application 221 generates alert data and stores the generated alert data in a storage medium. Thereby, alert data is stored in the alert storage unit 224. That is, in a case where log data (data of operation history) satisfying a condition set in the condition data storage unit 223 is detected, the data analysis application 221 functions as a data analysis unit to generate alert data (notification data) for notifying the detected log data and store the alert data in a storage medium. Fig. 11 is a schematic diagram illustrating alert data according to an embodiment of the present invention.

As illustrated in Fig. 11, the alert data of this embodiment includes an item "alert ID" for identifying a generated alert, an item "target node ID" indicating a node identified by the generated alert, an item "hierarchical position" indicating of hierarchical position of the identified node, an item "node name" indicating the name of the identified node, an item "alert name" indicating the name of an alert whose condition is satisfied, an item "alert date/time" indicating the date and time in which the alert is determined to be satisfied as a result of the analysis, and an item "notifying destination" indicating a destination to which the alert is to be notified.

The "target ID" corresponds to the item "node ID" of Fig. 8. The "hierarchical position" corresponds to the item "hierarchical position" of Fig. 8. The "node name" corresponds to the item "node name" of Fig. 8. The "alert name" corresponds to the item "condition name" of Fig. 10. The "notifying destination" corresponds to the item "notifying destination" of Fig. 8. In other words, in a case where the condition of Fig. 10 is satisfied by the analysis, the data analysis application 221 obtains corresponding data items (values) from the hierarchical structure storage unit 222 and the condition data storage unit 223 and generates the alert data illustrated in Fig. 11.

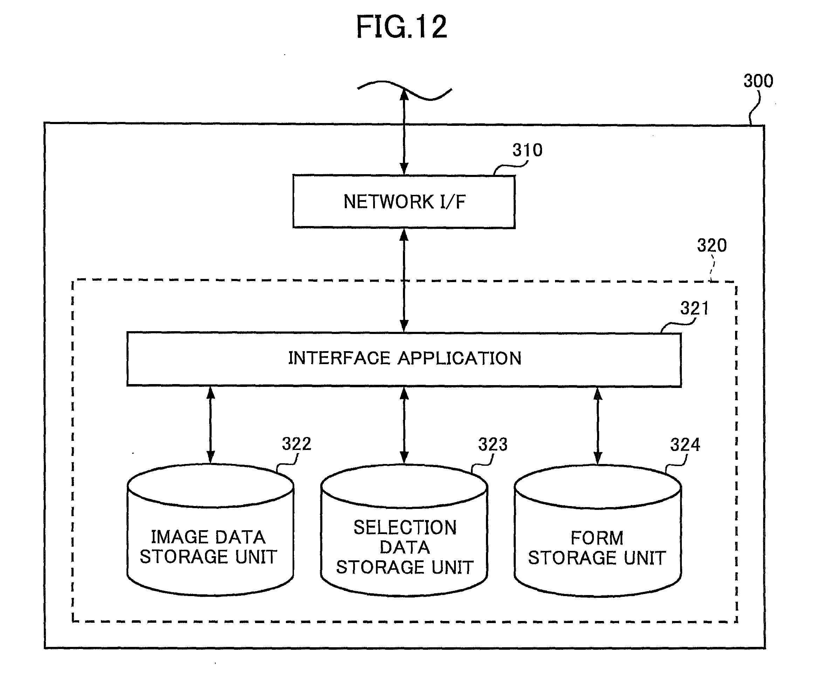

Next, a functional configuration of a screen generation server 300 according to an embodiment of the present invention is described. Fig. 12 is a schematic diagram illustrating the functional configuration of the screen generation server 300 according to an embodiment of the present invention. As illustrated in Fig. 12, the screen generation server 300 includes a controller 320 and a network I/F 310. Further, the controller 320 includes an interface application 321, a screen data storage unit 322, a selection data storage unit 323, and a form storage unit 324.

The network I/F 310 includes an interface for enabling the screen generation server 300 to communicate with other devices via a network. The network I/F 310 may be, for example, an Ethernet (registered trademark) interface or a USB interface. The controller 320 includes a combination of software and hardware. The controller 320 functions as a control unit that controls the entire screen generation server 300.

The interface application 321 provides a GUI of the sales management system to the sales representative using the sales management system based on the data gathered by the data gathering server 100 and the alert data generated by the data analysis server 200. Further, the interface application 321 automatically generates a resource (material) to be presented to the customer when the sales representative visits the customer according to the type of alert that is provided via the GUI. This function of the interface application 321 is one of the features of the present invention. The software program for implementing the function of the interface application 321 is used as a sales support program.

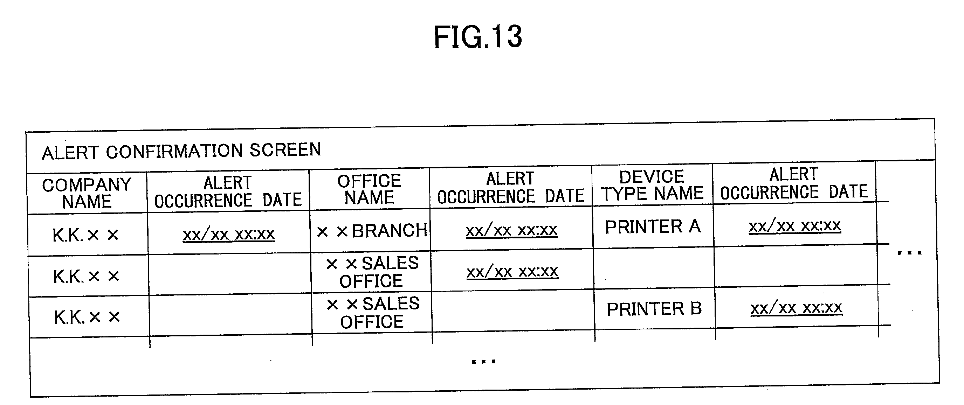

The screen data storage unit 322 stores data of the GUI provided by the screen generation server 300. The interface application 321 of this embodiment extracts the data gathered by the data gathering server 100 and the alert data generated by the data analysis server 200 from the screen data storage unit 322 and uses the extracted data as the framework to generate the GUI. Fig. 13 is a schematic diagram illustrating an alert confirmation screen displaying a list of alerts used in the sales management system according to an embodiment of the present invention.

As illustrated in Fig. 13, each of the items "company name" "office name" and "device name" is displayed in association with an item "alert generation date" in the alert confirmation screen. A node having the "hierarchal position" of "rank 1" in the hierarchal structure of Fig. 8 is displayed in the item "company name" of the alert confirmation screen. In a case where an alert is generated with respect to such node, a value indicating an alert generation date is displayed in the item "alert generation date" on the right side of the "company name" of the node.

A node having the "node attribute" of "organization" and having the "hierarchical position" other than "rank 1" in the hierarchal structure of Fig. 8 is displayed in the item "office name". In a case where an alert is generated with respect to such node, a value indicating an alert generation date is displayed in the item "alert generation date" on the right side of the "office name".

A node having the "node attribute" of "machine" in the hierarchical structure of Fig. 8 is displayed in the item "device name". In a case where an alert is generated with respect to such node, a value indicating an alert generation date is displayed in the item "alert generation date" on the right side of the "office name". In the alert confirmation screen of Fig. 13, each date of the item "alert generation date" is underlined to indicate that the item is a link. Thus, by clicking the date of the item "alert generation date", a detailed screen corresponding to the alert is displayed or a generation of an improvement proposal sheet is activated.

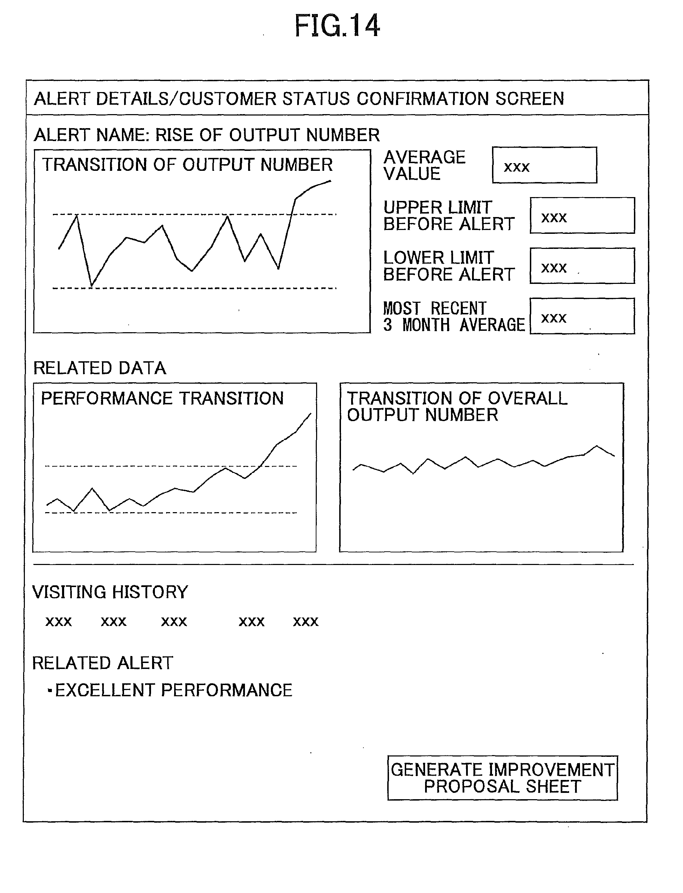

Fig. 14 is a schematic diagram illustrating an example of an alert details/customer status confirmation screen according to an embodiment of the present invention. The alert details/customer status confirmation screen is a screen that displays details of an alert. In response to a request from the client terminal 400 to the screen generation server 300, the interface application 321 of the screen generation server 300 generates data of the screen of Fig. 14 and transmits the generated data to the client terminal 400. Thereby, the screen of Fig. 14 is displayed in the client terminal 400. The alert confirmation screen of Fig. 13 and the alert details/customer status confirmation screen of Fig. 14 are used a notification screen for notifying that the condition set in the condition data storage unit 223 is satisfied. Accordingly, the interface application 321 functions as a screen data generation unit that generates the notification screen.

The alert details/customer status confirmation screen of Fig. 14 is an example of a screen when the condition "rise of output number" of Fig. 10 is satisfied. As illustrated in Fig. 14, data of an "alert name" of Fig. 11 (in this example, alert name "rise of output number") is displayed in the alert details/customer status confirmation screen. Further, data of an analysis target for analyzing the satisfied condition (in this example, a graph "transition of output number") is displayed in the alert details/customer status confirmation screen.

In the case of displaying the graph "transition of output number" of Fig. 14, the interface application 321 generates data for displaying the graph "transition of output number" based on the log data stored in the operation log storage unit 122 of the data gathering server 100. Similarly, the values of the items that are to be displayed on the right side of the graph are generated based on the log data stored in the operation log storage unit 122 of the data gathering server 100.

The "related data" of Fig. 14 indicates data that are to be confirmed in relation with a generated alert. In the example of Fig. 14, data such as "performance transition" and "transition of overall output number" are selected to be displayed as the related data. The data to be displayed as the related data may be extracted from the operation log storage unit 122 or the performance data storage unit 125 of the data gathering server 100. The data selected as the "related data" are stored as framework in the screen data storage unit 322.

The "visiting history" indicates a history of sales activities with respect to a target of an alert (e.g., company or sales office). The "visiting history" is generated and displayed based on data stored in the sales activity storage unit 124 of the data gathering server 100.

The "related alert" indicates an alert that is to be confirmed in relation with a generated alert. For example, in a case where the generated alert is "rise of output number", it can be assumed that the rise of output number is due to excellent sales performance. In this case, if alert data with respect to the same customer is stored as illustrated in Fig. 11, multiple alert names corresponding to the alert data may be extracted and displayed. That is, as illustrated in Fig. 14, the interface application 321 generates a screen to notify that multiple related conditions are satisfied at the same time. Thereby, the user can associate various factors with each other to accurately grasp the status of a customer.

Further, the associated alert data may be stored as the framework of the screen data in the screen data storage unit 322 or stored in association with the below-described data in the selection data storage unit 323.

When the button "generate improvement proposal sheet" of the screen of Fig. 14 is clicked, the interface application 321 obtains data from the form storage unit 324 according to the alert that is generated and generates an improvement proposal sheet to be proposed to the customer. In the case of generating the improvement proposal sheet, the interface application 321 may generate and output a form according to a combination of generated alerts based on the data stored in the selection data storage unit 323.

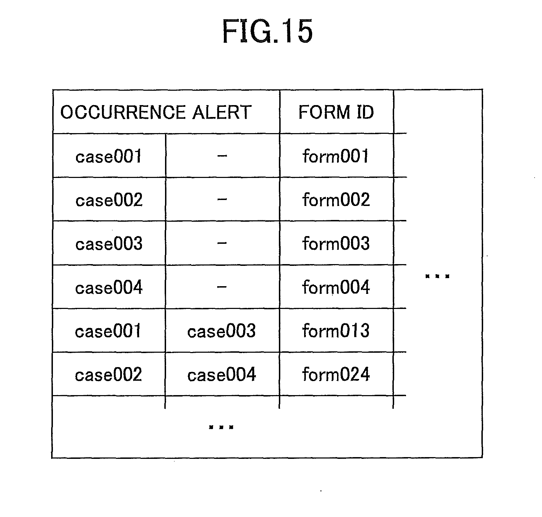

Fig. 15 is a schematic diagram illustrating an example of the data stored in the selection data storage unit 323. As illustrated in Fig. 15, one or two alert IDs are designated as a "generated alert" and stored in the selection data storage unit 323 in association with a "form ID" for identifying a form to be output as an improvement proposal sheet. That is, multiple conditions that are set in the condition data of Fig. 10 are stored in association with forms to be presented in the selection data storage unit 323.

In a case where a single alert ID is designated to an alert", the alert ID is associated with a form that is to be output when the alert is generated. In this case, the interface application 321 generates data of a document (form) according to a condition that is satisfied. In a case where two alert IDs are designated to an alert, the two alert IDs are associated with a form that is to be output when the two alerts are generated. In this case, the interface application 321 generates data of a document (form) according to a condition that is satisfied.

With the data process system 1000 according to an embodiment of the present invention, a form that is suitable for proposing improvement to a customer can be generated in correspondence with each alert. Thus, sales support can be performed more effectively by using the form. In addition, because a suitable form can be associated not only with a single alert but also with a combination of alerts (e.g., "rise of output number" and "excellent performance"), sales support can be performed even more effectively. Although a combination of two alerts is associated with a form according to the above-described embodiment, a combination of three or more alerts may be associated with a form.

Further, by associating a "related alert" with an alert and a form based on the data stored in the selection data storage unit 323, the form and associated alerts can be recognized as a combination of related alerts.

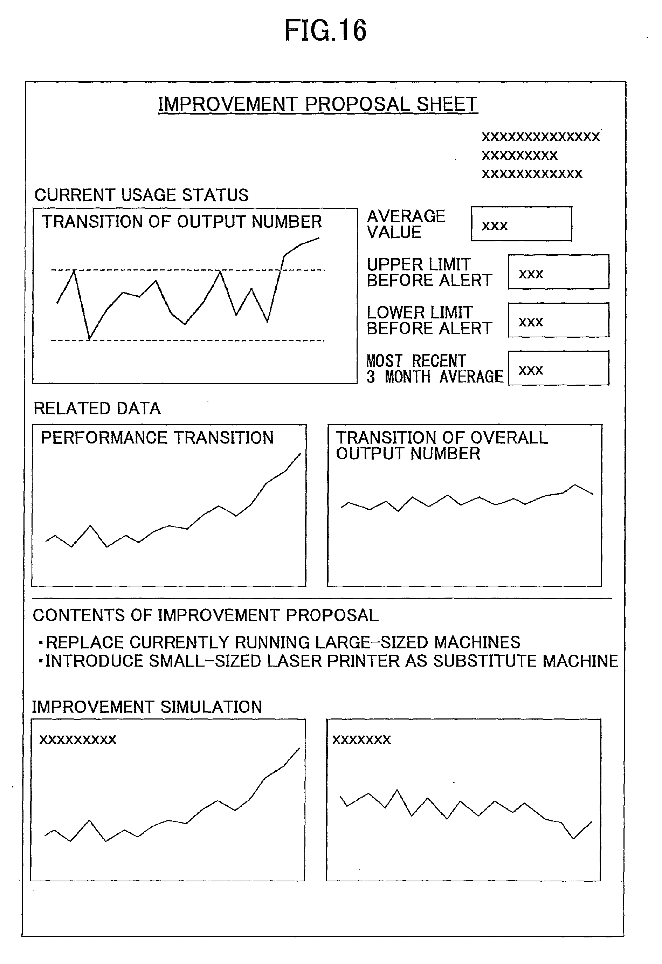

Fig. 16 is a schematic diagram illustrating an example of an improvement proposal sheet (form) according to an embodiment of the present invention. As illustrated in Fig. 16, the improvement proposal sheet is a document to be present to the user of the image process apparatus 2 based on the above-described alert data. Thus, the interface application 321 functions as a document data generation unit. As illustrated in Fig. 16, the "current usage status" indicates data based on the "alert name" displayed in the screen illustrated in Fig. 14. Further, the "related data" indicates the "related data" displayed in the screen illustrated in Fig. 14. Thereby, the customer can precisely grasp, for example, the status of the image process apparatus 2.

The interface application 321 automatically obtains data to be indicated in the improvement proposal sheet from the data gathering server 100 and generates the obtained data. Therefore, the workload for preparing the improvement proposal sheet (form) can be reduced for the sales representative. Thus, an effective sales tool can be promptly prepared for the sales representative.

Suitable contents for proposing improvement are set in the "contents of improvement proposal" in each improvement proposal sheet (form). That is, the "contents of improvement proposal" indicates contents to be proposed to the user of the image process apparatus 2 for changing the environment pertaining to the image process apparatus 2 based on the generated alert(s). The data of the improvement proposal sheet (form) is stored in the form storage unit 324. For example, in a case of a form corresponding to the alert "rise of output number", replacement of an apparatus or introduction of a substitute machine may be proposed for reducing the workload of a single image process apparatus 2.

The "improvement simulation" indicates a simulation where the "contents of improvement proposal" proposed in the improvement proposal sheet are executed. That is, the "improvement simulation" indicates data that is predicted according to the proposed change of environment of the image process apparatus 2. The calculation formulas and conditions for executing the simulation are stored as part of the improvement proposal sheet (form) in the form storage unit 324. The interface application 321 generates the "improvement simulation" of Fig. 16 by applying, for example, the conditions stored in the form storage unit 324 to perform calculation on the data managed by the data gathering server 100. By displaying the simulation of the contents of improvement proposal in the improvement proposal sheet (form), the generated improvement proposal sheet allows the customer to further grasp, for example, the environment pertaining to the image process apparatus 2.

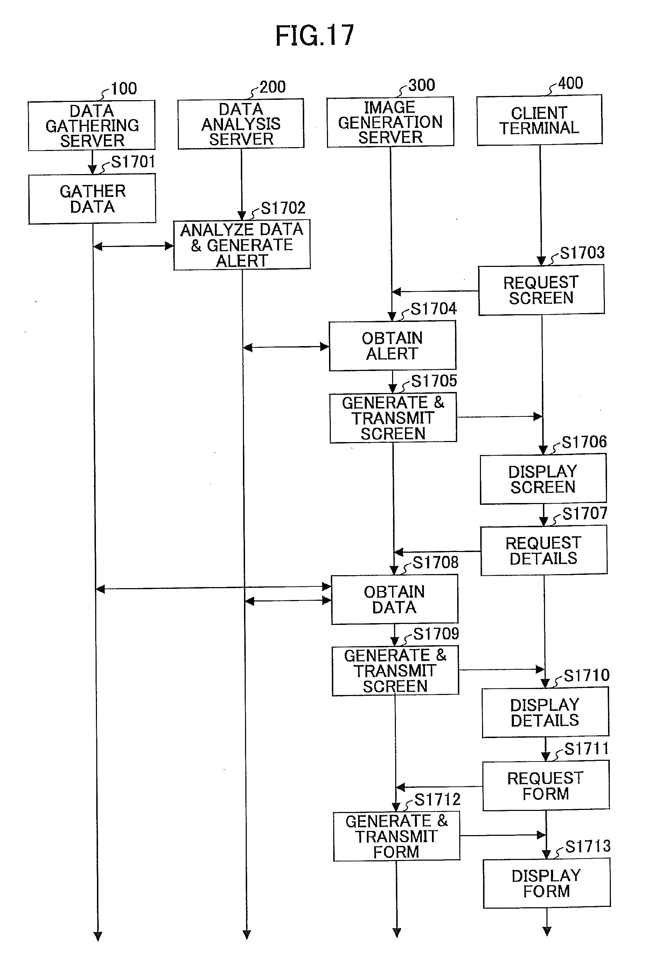

Next, an operation of the entire data process system 1000 according to an embodiment of the present invention is described with reference to a sequence diagram of Fig. 17. As illustrated in Fig. 17, the data gathering server 100 gathers data at a given timing (Step S1701). Thereby, data to be analyzed by the data analysis server 200 or data to be generated by the screen generation server 300 are accumulated in the data gathering server 100.

Further, the data analysis server 200 refers to the data stored in the data gathering server 100 at a given timing and generates alert data by performing the above-described data analysis (Step S1702). Thereby, alert data as described above with Fig. 11 are accumulated in the data analysis server 200. The processes performed in Steps S1701 and S1702 are repeatedly performed at given timings.

A sales representative using the sales supporting system 1000 operates the client terminal 400 sends a screen request to the screen generation server 300 for generating data to be displayed in the alert confirmation screen of Fig. 13 (Step S1703). In Step S1703, the client terminal 400 notifies the ID of the sales representative together with the screen request to the screen generation server 300. The ID of the sales representative corresponds to the "notifying destination" of Fig. 11. Thereby, the screen generation server 300 can narrow down the alerts to be notified to the client terminal 400 based on the "notifying destination" and generate a screen suitable for the client terminal 400.

The screen generation server 300 that has received the screen request extracts data corresponding to the notified ID from the alert data of Fig. 11 (Step S1704). Then, the screen generation server 300 generates the alert confirmation screen described above with Fig. 13 and transmits the generated screen to the client terminal 400 (Step S1705). Thereby, the client terminal 400 displays the alert confirmation screen of Fig. 13 (Step S1706).

When the "alert occurrence date" displayed in the alert confirmation screen of Fig. 13 is clicked, the client terminal 400 sends a details request to the screen generation server 300 for generating detailed data to be displayed in the alert details/customer status confirmation screen of Fig. 14 (Step S1707).

In Step S1707, the client terminal 400 notifies the ID of the alert having the requested details together with the details request to the screen generation server 300. Thereby, the screen generation server 300 can recognize the alert to be presented to the client terminal 400.

The screen generation server 300 having received the details request obtains data to be used for generating the alert details/customer status confirmation screen from the data gathering server 100 and the data analysis server 200 (Step S1708). Then, the screen generation server 300 generates the alert details/customer status confirmation screen described above with Fig. 14 and transmits the generated screen to the client terminal 400 (Step S1709). Thereby, the client terminal 400 displays the alert details/customer status confirmation screen of Fig. 14 (Step S1710).

In Step S1708, the screen generation server 300 searches the alert data of Fig. 11 based on the notified alert ID and extracts a "target node ID" associated with the notified alert ID. Then, the screen generation server 300 searches the alert data of Fig. 11 again based on the extracted "target node ID". Thereby, the screen generation server 300 can extract another alert(s) that is generated at the same time with respect to the node corresponding to the target node ID.

Then, the screen generation server 300 determines whether the extracted other alert(s) is to be displayed as the "related alert" of Fig. 14 according to the forms stored in the screen data storage unit 322 and the associated alerts in the selection data storage unit 323.

When the button "generate improvement proposal sheet" is clicked in a case where the alert details/customer status confirmation screen of Fig. 14 is displayed by the client terminal 400, the client terminal 400 sends a form generation request to the screen generation server 300 for generating an improvement proposal sheet (form) corresponding to the generated alert (Step S1711). In Step S1711, the client terminal 400 notifies the "alert ID" of the generated alert and the "alert ID" of the other alert displayed as the "related alert" together with the form generation request to the screen generation server 300. Thereby, the screen generation server 300 can recognize the alert(s) that is to be referred when generating the requested form.

The screen generation server 300 having received the form generation request generates the form described above with Fig. 16 according to the data of the forms stored in the form storage unit 324 and the data stored in the data gathering server 100. Then, the screen generation server 300 transmits the generated form to the client terminal (Step S1712). Thereby, the client terminal 400 displays the improvement proposal sheet (form) of Fig. 16 (Step S1713). Thus, the sales representative can conduct sales activities to a customer by referring to or printing out the data of the displayed improvement proposal sheet (form).

Hence, with the sales supporting system 1000 according to the above-described embodiment, an alert for notifying the timing for contacting a customer can be generated by analyzing data pertaining to an operation history of a machine that is already purchased and used by a customer according to a predetermined condition. In a case of generating a resource (material) to be presented to the customer based on the generated alert, the resource (material) can be generated by obtaining the above-described operation history.

By presenting the resource (material) based on the operation history in the past, the customer can understand the resource (material) easily. According to a related art example, the preparation of such resource (material) is burdensome for a sales representative because the preparation of such resource (material) is conducted manually by the sales representative. However, with the sales supporting system 1000 according to the above-described embodiment, the data of the operation history for analyzing the timing for contacting the customer can be automatically obtained based on the data of the forms stored in the form storage unit 324, and the resource (material) can be generated by performing calculations and the like. Thus, such difficulty can be resolved with the sales supporting system 1000 according to the above-described embodiment. Hence, with the sales supporting system 1000 according to the above-described embodiment, a sales supporting tool for efficiently contacting the customer can be provided based on the operation (running) amount of the image process apparatus already installed and used by the customer.

In the above-described embodiment, a different improvement proposal sheet (form) is set in association with each alert or each combination of alerts. Thus, a suitable improvement proposal sheet (form) is automatically generated according to a generated alert to facilitate the workload of the sales representative.

In an alternative example, a single type of improvement proposal sheet (form) may be generated regardless of the type of alert. Even in this case, an effect similar to the above-described embodiment can be attained by obtaining data stored in the data gathering server 100 according to the data of the forms stored in the form storage unit 324 and generating data of the improvement proposal sheet (form) to be presented.

Further, in the above-described embodiment, analysis is performed on multiple predetermined conditions from the beginning. However, analysis of a condition(s) may be performed only when a certain condition is satisfied. For example, in a case where a condition "rise of output number" is satisfied, another condition "excellent performance" may be analyzed to further determine the cause of the "rise of output number". Thereby, the amount of performing unnecessary calculations can be reduced.

The present invention is not limited to the specifically disclosed embodiments, and variations and modifications may be made without departing from the scope of the present invention.

## Claims

1. A data process system **characterized by** comprising:
an operation history data gathering unit configured to obtain an operation history data of an image process apparatus;
a data analysis unit configured to analyze the operation history data according to a predetermined condition and generate notification data in a case where the predetermined condition is satisfied;
a screen data generation unit configured to generate screen data according to the notification data for displaying a notification screen to indicate that the predetermined condition is satisfied; and
a document data generation unit configured to generate document data pertaining to a document to be presented to a user of the image process apparatus based on the analyzed operation history data in response to an operation performed on the notification screen.

2. The data process system as claimed in claim 1, **characterized in that** the data analysis unit is further configured to analyze the operation history data in correspondence with a plurality of predetermined conditions and generate the notification data with respect to each of the plurality of predetermined conditions that is satisfied.

3. The data process system as claimed in claim 2, **characterized in that** the document data generation unit is further configured to generate the document data according to data including the plurality of predetermined conditions associated with the document.

4. The data process system as claimed in claim 3, **characterized in that** in a case where the plurality of predetermined conditions are satisfied at the same time according to the data including the plurality of predetermined conditions associated with the document, the document data generation unit is further configured to generate the document data in correspondence with a combination of the plurality of predetermined conditions that are satisfied.

5. The data process system as claimed in claim 2, **characterized in that** in a case where the plurality of predetermined conditions are satisfied at the same time according to related data associated with the plurality of predetermined conditions, the screen generation unit is configured to generate the screen data for displaying another notification screen to indicate that the plurality of predetermined conditions are satisfied.

6. The data process system as claimed in claim 1, **characterized in that** the data analysis unit is configured to analyze the operation history data in correspondence with each node included in a tree structure including data indicating an organization of the user and the image process apparatus of the user.

7. The data process system as claimed in claim 1,
**characterized in that** the document data includes data that proposes a change of an environment of the image process apparatus,
wherein the document data generation unit is further configured to generate prediction data in correspondence with the proposed change of the environment of the image process apparatus.

8. A data process method **characterized by** comprising the steps of:
obtaining an operation history data of an image process apparatus;
analyzing the operation history data according to a predetermined condition;
generating notification data in a case where the predetermined condition is satisfied;
generating screen data according to the notification data for displaying a notification screen to indicate that the predetermined condition is satisfied; and
generating document data pertaining to a document to be presented to a user of the image process apparatus based on the analyzed operation history data in response to an operation performed on the notification screen.
